# EUROPEAN PATENT APPLICATION

(11) **EP 3 453 571 A1**
(43) Date of publication of application: **13.03.2019**
(21) Application number: 18192592.6
(22) Date of filing: 04.09.2018
(51) Int. Cl.: B60Q 1/50, B60Q 1/48

(54) **CONTROL DEVICE FOR VEHICLE HEADLIGHT**

(30) Priority: 08.09.2017 JP 2017173142
(71) Applicant: STANLEY ELECTRIC CO., LTD., Tokyo 153-8636 (JP)
(72) Inventor: NAKASHIMA, Wataru, Tokyo, 153-8636 (JP); KITA, Yasushi, Tokyo, 153-8636 (JP); KIMURA, Takako, Tokyo, 153-8636 (JP); UCHIDA, Mitsuhiro, Tokyo, 153-8636 (JP); WARAGAYA, Takeshi, Tokyo, 153-8636 (JP)
(74) Representative: Emde, Eric

(57) **Abstract**

A control device for a vehicle headlight (L) is a control device (10) that controls radiation of light from the vehicle headlight (L), and includes a radiation controller (1) that causes the vehicle headlight (L) to radiate pattern light (SA), which includes a first pattern with a marginal portion (MA1, MA2) that exceeds a portion corresponding to a vehicle width of the vehicle (1).

## Description

### BACKGROUND OF THE INVENTION

### Field of the Invention

The present invention relates to a control device for a vehicle headlight.

### Description of Related Art

In the related art, a device for drawing a pattern showing a braking stopping distance of a vehicle on a road surface is known (for example, Japanese Unexamined

Patent Application, First Publication No. 2014-153868).

### SUMMARY OF THE INVENTION

In the related art, a driver who is driving an unfamiliar vehicle may not be understanding a width of the vehicle well. For this reason, when passing by with another vehicle or overtaking another vehicle, an interval between the other vehicle and a host vehicle may be excessively large or may be insufficient. In addition, if the driver does not understand the width of the host vehicle, the host vehicle may travel along an edge of a traveling lane. In this way, if the driver does not understand the width of the host vehicle, unbalanced driving may be caused. For example, an inexperienced driver, a rental car driver, a car-sharing user, or the like, may be considered as a driver who is driving an unfamiliar vehicle.

An aspect of the present invention is directed to providing a control device for a vehicle headlight capable of showing a width of a vehicle to a driver.

A control device for a vehicle headlight according to an aspect of the present invention is a control device that controls radiation of light from the vehicle headlight, the control device including: a radiation controller that causes the vehicle headlight to radiate pattern light, which includes a first pattern, to a marginal portion that goes beyond a portion corresponding to a vehicle width of the vehicle.

In the above-mentioned controlling device for a vehicle headlight, the radiation controller may radiate the pattern light, which further includes a second pattern, to a portion corresponding to the vehicle width of the vehicle, as the pattern light.

In the above-mentioned controlling device for a vehicle headlight, the radiation controller may radiate the pattern light, which further includes a third pattern, to a portion extending in a perpendicular direction with respect to a center portion corresponding to the vehicle width of the vehicle.

In the above-mentioned controlling device for a vehicle headlight, the first pattern may include a pattern that causes an optical illusion which makes a direction of the vehicle width of the vehicle look wider.

In the above-mentioned device for controlling the headlights of a vehicle, the radiation controller may cause flashing of light, or make the colors of light different from each other in all or a part of the pattern light in a case a marginal portion exceeds a boundary of a road surface.

In the above-mentioned controlling device for a vehicle headlight, the radiation controller may output a predetermined signal to another device in a case the marginal portion exceeds a boundary of a road surface.

In the above-mentioned controlling device for a vehicle headlight, the radiation controller may radiate light indicating guidance for a steering angle of the vehicle by using the headlights or other lights in a case a curve is present in a direction of advance of the vehicle in map information.

According to the aspect of the present invention, it is possible to indicate a width of a vehicle to a driver.

### BRIEF DESCRIPTION OF THE DRAWINGS

FIG. 1 is a view showing an example of a radiation region irradiated with light from headlights of a vehicle.
FIG. 2 is a view showing an example of a functional configuration of a control device.
FIG. 3 is a view showing an example of a pattern based on a vehicle width of the vehicle having headlights that radiate light to a traveling lane.
FIG. 4A is a view showing an example of a variation of a pattern showing a vehicle width.
FIG. 4B is a view showing another example of a variation of a pattern showing a vehicle width.
FIG. 5 is a view showing an example of an operation procedure of a control device according to a third embodiment.
FIG. 6 is a view showing an example of pattern light radiated by a radiation controller according to a fourth embodiment.
FIG. 7 is a view showing an example of an operation procedure of a control device according to a fourth embodiment.

### DETAILED DESCRIPTION OF THE INVENTION

Hereinafter, embodiments of the present invention will be described in detail with reference to the accompanying drawings.

### <First embodiment>

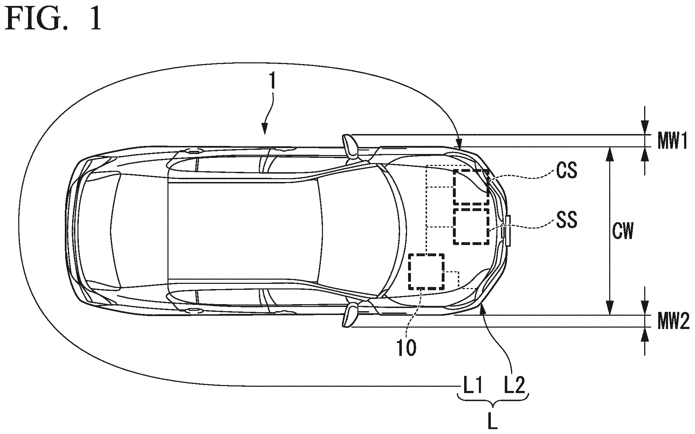

FIG. 1 is a view showing an example of a radiation region irradiated with light from headlights L (a headlight L1 and a headlight L2) of a vehicle 1. In the following description, a direction in which the vehicle 1 advances is described as "forward." In addition, the vehicle 1 is an automobile.

A vehicle width of the vehicle 1 is a vehicle width CW indicating a width in a direction perpendicular to the direction in which the vehicle 1 advances. The vehicle width is a width that does not include widths of mirrors or the like installed on both side surfaces in the direction in which the vehicle 1 advances. In the following description, a direction parallel to the vehicle width CW of the vehicle 1 is also referred to as a vehicle width direction.

A width of the mirror installed on a left side surface in the direction in which the vehicle 1 advances is referred to as a margin MW1. In addition, a width of the mirror installed on a right side surface in the direction in which the vehicle 1 advances is referred to as a margin MW2.

The vehicle 1 includes a control device 10, the headlight L1, the headlight L2, a sensor SS and a traveling information device CS.

The control device 10 controls the headlight L1 and the headlight L2.

The headlight L1 and the headlight L2 radiate light to a side in front of the vehicle 1. In the embodiment, when the headlight L1 and the headlight L2 are not distinguished, they are generally referred to as the headlights L. The headlights L can control a luminous intensity indicating a level of brightness of the radiated light and a position to which the light is radiated (for example, a range) on the basis of a control signal from the control device 10.

The sensor SS detects light radiated from the headlights L provided in the vehicle 1, a white line formed on a traveling lane on which the vehicle 1 is traveling, or the like. The sensor SS is, for example, an image sensor such as an imaging device (a camera) or the like.

The traveling information device CS has host vehicle traveling information that is information related to traveling of the vehicle 1. The traveling information device CS is, for example, a car navigation device. For example, information of a speed of the host vehicle, information showing an attitude of the host vehicle (for example, one or more of an angle of the host vehicle, an angular speed of the host vehicle and an angular acceleration of the host vehicle), information showing a steering angle (a steered angle) of the host vehicle, information showing an acceleration of the host vehicle, information showing a position of the host vehicle, map information showing information of a road on which the host vehicle is traveling, information showing a state of an input of a switch of the vehicle 1, and so on, may be used as the host vehicle traveling information.

### <Functional configuration of control device 10>

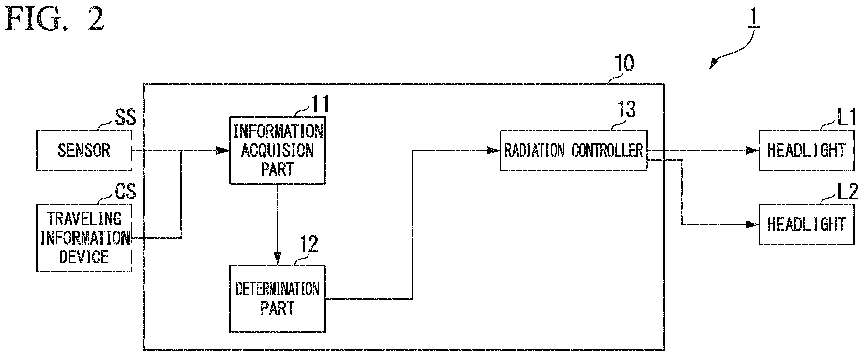

Next, an example of a functional configuration of the control device 10 will be described with reference to FIG. 2.

FIG. 2 is a view showing the example of the functional configuration of the control device 10.

The control device 10 includes an information acquisition part 11, a determination part 12 and a radiation controller 13.

The sensor SS outputs a captured image to the information acquisition part 11.

The information acquisition part 11 acquires the captured image input from the sensor SS. In addition, the information acquisition part 11 acquires host vehicle traveling information from the traveling information device CS provided in the vehicle 1.

The information acquisition part 11 outputs the captured image acquired from the sensor SS and the host vehicle traveling information acquired from the vehicle 1 to the determination part 12.

The determination part 12 determines various kinds of determination on the basis of the captured image input from the information acquisition part 11 and the host vehicle traveling information. For example, the determination part 12 determines a state of radiation of light from the headlights L on the basis of the information showing the state of the input of a switch included in the host vehicle traveling information. The determination part 12 outputs the determined result to the radiation controller 13.

The radiation controller 13 controls a state of the radiation of the headlight L1 and the headlight L2 on the basis of the determination result acquired from the determination part 12. The state of the radiation is, for example, one or more of a state in which light is radiated, a state in which light is not radiated, a state in which a range (a pattern) of radiated light is a specified range, a state in which a color of radiated light is a specified color, a state in which an intensity of radiated light is a specified intensity, and so on.

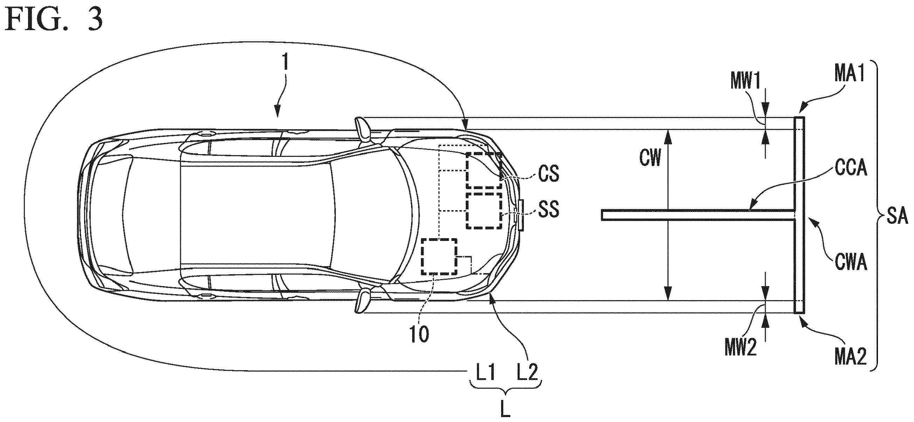

Here, a pattern based on a vehicle width of the vehicle 1 which is radiated to a traveling lane by the headlights L will be described with reference to FIG. 3.

FIG. 3 is a view showing an example of a pattern SA based on the vehicle width of the vehicle 1 which is radiated to a traveling lane by the headlights L.

The headlights L radiate the pattern SA based on the vehicle width to a side in front of the vehicle. The pattern SA includes a marginal area MA1, a marginal area MA2, a vehicle width area CWA and a central area CCA.

The marginal area MA1 is pattern light radiated to a position corresponding to the margin MW1 that is a portion that exceeds a portion corresponding to the vehicle width CW of the vehicle 1. The marginal area MA2 is pattern light radiated to a position corresponding to the margin MW2 that is a portion that exceeds a portion corresponding to the vehicle width CW of the vehicle 1. Specifically, a length of the marginal area MA1 in a vehicle width direction and a length of the marginal area MA2 in the vehicle width direction are larger than lengths of the corresponding mirrors in the vehicle width direction, respectively. The marginal area MA1 and the marginal area MA2 are an example of a first pattern.

The vehicle width area CWA is pattern light radiated to a portion corresponding to the vehicle width CW of the vehicle 1. Specifically, the vehicle width area CWA is radiated to positions parallel to the vehicle 1 in the vehicle width direction (a parallel range). In addition, the vehicle width area CWA is a pattern having a length equal to the vehicle width CW of the vehicle 1. The vehicle width area CWA is an example of a second pattern.

The central area CCA is pattern light radiated to a portion extending in a direction perpendicular to the vehicle width area CWA from a center of the vehicle 1. The central area CCA is an example of a third pattern.

### [Summary of first embodiment]

As described above, the vehicle 1 of the first embodiment includes the radiation controller 13. The radiation controller 13 radiates pattern light of the pattern SA to a side in front of the vehicle 1. The pattern light includes the marginal area MA1 and the marginal area MA2. Accordingly, in the vehicle 1, the control device 10 can show the portion that exceeds the vehicle width CW to a driver who is driving the vehicle 1. The driver who is driving the vehicle 1 can intuitively understand a length of the vehicle width of the vehicle 1 (a length larger than the vehicle width in the pattern SA) by seeing the pattern light of the pattern SA. In addition, the driver who is driving the vehicle 1 easily understands a position at which the vehicle 1 is traveling along a traveling lane (for example, a central position, a position close to a sidewalk, a position close to a facing lane, or the like) by seeing the pattern light of the pattern SA.

The driver who is driving the vehicle 1 can visually recognize a portion that exceeds the vehicle width CW. For this reason, the driver who is driving the vehicle 1 can easily secure a gap when the vehicle 1 passes by another vehicle or overtakes another vehicle even in the case in which the driver drives an unfamiliar vehicle 1. In addition, a length of the marginal area MA1 in the vehicle width direction and a length of the marginal area MA2 in the vehicle width direction are larger than lengths of the corresponding mirrors in the vehicle width direction, respectively. For this reason, for example, the driver who is driving the vehicle 1 can avoid collision between a portion that exceeds the vehicle width CW such as the mirrors of the vehicle 1 and the other vehicle, an obstacle, or the like, by driving the vehicle 1 such that the marginal area MA1 and the marginal area MA2 do not overlap another vehicle or an obstacle (in the embodiment, including a sign on a road).

In addition, the driver who is driving the vehicle 1 can recognize a vehicle width including the margin longer than the actual vehicle width CW of the vehicle 1 as the vehicle width of the vehicle 1 using the marginal area MA1 and the marginal area MA2. Therefore, for example, the driver who is driving the vehicle 1 can appropriately drive the vehicle 1 even when the vehicle 1 is an unfamiliar vehicle.

Further, while the configuration in which the pattern SA radiated by the radiation controller 13 includes the vehicle width area CWA has been described in the above-mentioned description, a configuration in which the vehicle width area CWA is not provided may be used. The radiation controller 13 can more clearly show the vehicle width CW of the vehicle 1 to the driver by radiating the pattern SA including the vehicle width area CWA. For this reason, the pattern SA including the vehicle width area CWA is assumed to allow the driver to understand the interval of the vehicle width CW easily.

Further, while the configuration in which the pattern SA radiated by the radiation controller 13 has the central area CCA has been described in the above-mentioned description, a configuration in which the central area CCA is not provided may be used. The radiation controller 13 can show a centerline showing a center of the vehicle 1 in the vehicle width direction to the driver by radiating the central area CCA showing a centerline perpendicular to the vehicle width direction of the vehicle 1. Accordingly, the driver can understand which position a center (a centerline) of the vehicle 1 is in the traveling lane with respect to a direction of advance, and can suitably drive the vehicle.

Further, the radiation controller 13 may switch the configuration of the pattern SA according to an operation of the driver. For example, the driver may switch a state of a configuration difference such as a configuration in which the above-mentioned pattern SA has the marginal area MA1 and the marginal area MA2, and a configuration in which the vehicle width area CWA or the central area CCA is further provided in addition to that configuration, or the like. Of course, the driver may switch between a state in which the pattern SA is radiated and a state in which the pattern SA is not radiated.

Further, the radiation controller 13 may vary a length of the marginal area MA1 in the vehicle width direction and a length of the marginal area MA2 in the vehicle width direction according to a speed of the vehicle 1. For example, the radiation controller 13 may increase lengths of the marginal area MA1 and the marginal area MA2 in the vehicle width direction when the speed of the vehicle 1 is higher than a predetermined speed. In addition, the radiation controller 13 may reduce lengths of the marginal area MA1 and the marginal area MA2 in the vehicle width direction when the speed of the vehicle 1 is lower than a predetermined speed. In addition, the radiation controller 13 may be configured to switch between varying the lengths of the marginal area MA1 and the marginal area MA2 in the vehicle width direction or not, according to an operation of the driver who is driving the vehicle 1.

In addition, as another example, the radiation controller 13 may vary the length of the marginal area MA1 in the vehicle width direction and the length of the marginal area MA2 in the vehicle width direction according to a road situation, a road width, or the like.

Here, various aspects may be used as a length (a length in a direction corresponding to the direction of advance) or a width (a width in a direction corresponding to the vehicle width direction) of the central area CCA.

In addition, various aspects may be used as a width (a width in a direction corresponding to the direction of advance) of the vehicle width area CWA.

In addition, various aspects may be used as lengths (lengths in a direction corresponding to the vehicle width direction) or widths (widths in a direction corresponding to the direction of advance) of the marginal area MA1 and the marginal area MA2. Further, while the marginal area MA1 and the marginal area MA2 have the same lengths (the lengths in the direction corresponding to the vehicle width direction) or the widths (the widths in the direction corresponding to the direction of advance) in the embodiment, one or both of them may be different in another configuration example.

In addition, while the lengths (the lengths in the direction corresponding to the vehicle width direction) of the marginal area MA1 and the marginal area MA2 are set with reference to the side mirrors in the embodiment, as another example, the lengths may be set independently from the side mirrors.

In addition, while the pattern SA has a shape symmetrical with respect to the central area CCA (symmetrical in a direction corresponding to the vehicle width direction) in the embodiment, another shape may be used.

### <Second embodiment>

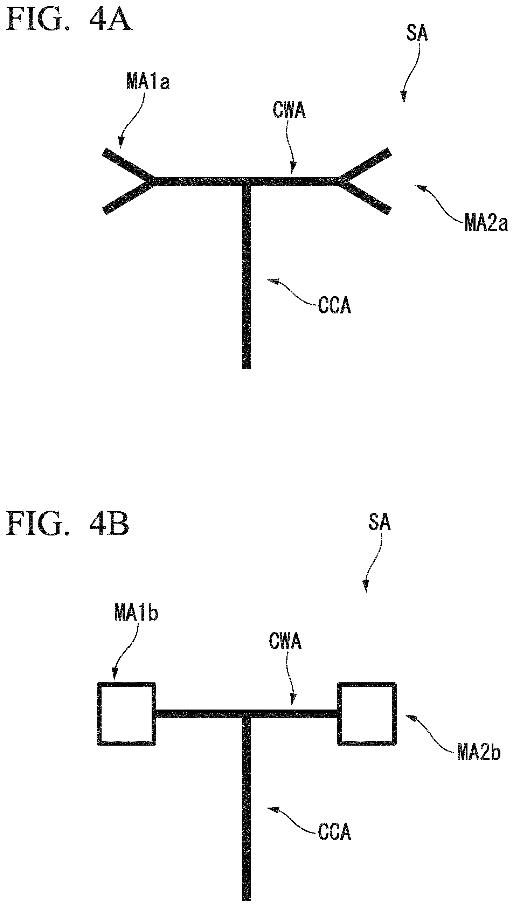

Next, a variation of the pattern SA will be described with reference to FIG. 4A and FIG. 4B.

FIG. 4A is a view showing an example of the variation of the pattern SA.

FIG. 4B is a view showing another example of the variation of the pattern SA.

A marginal area of a second embodiment has a pattern that causes an optical illusion which makes a direction of the vehicle width CW of the vehicle 1 look wider.

The marginal area MAla and the marginal area MA2a shown in FIG. 4A are patterns that cause a Muller-Lyer optical illusion. The patterns that cause the Muller-Lyer optical illusion have lines extending toward an inclined front side directed toward an outer side of the vehicle 1 and extending toward an inclined rear side directed toward the outer side of the vehicle 1 at both end portions of the vehicle width area CWA in the vehicle width direction.

The marginal area MAlb and the marginal area MA2b shown in FIG. 4B are patterns that cause a Baldwin optical illusion. The patterns that cause the Baldwin optical illusion have quadrangular shaped patterns at both end portions of the vehicle width area CWA in the vehicle width direction.

### [Summary of second embodiment]

As described above, the control device 10 according to the second embodiment has a pattern that causes an optical illusion in which the marginal area MA1 and the marginal area MA2 in the pattern SA looks wider in the direction of the vehicle width CW of the vehicle 1. The driver who is driving the vehicle 1 feels that the vehicle width CW of the vehicle 1 is larger than the width of the actual vehicle 1 according to the pattern that causes the optical illusion. For this reason, by driving the vehicle 1 with an interval at which the vehicle 1 does not overlap another vehicle, an obstacle, or the like, the driver can suppress collision between the portion that exceeds the vehicle width CW such as the mirrors or the like of the vehicle 1 and another vehicle, an obstacle, or the like.

Further, in the marginal area, another optical illusion except the above-mentioned Muller-Lyer optical illusion and Baldwin optical illusion may be used.

### <Third embodiment>

Next, a radiation controller 13 according to a third embodiment will be described. The radiation controller 13 according to the third embodiment performs flickering (flashing) of light or making colors of the light different in a part of or the entire pattern SA when the marginal area MA1 or the marginal area MA2 exceeds a boundary of the traveling lane. Specifically, the determination part 12 determines whether the pattern SA is radiated on the traveling lane of the vehicle 1 on the basis of the image captured by the sensor SS. The control device 10 varies a state of radiation of the pattern SA when it is determined that the marginal area MA1 or the marginal area MA2 of the pattern SA is radiated to a position that exceeds the traveling lane of the vehicle 1. For example, a state of at least one of the marginal area MA1, the marginal area MA2 and the vehicle width area CWA that are radiated to the position that exceeds the traveling lane of the vehicle 1 is varied.

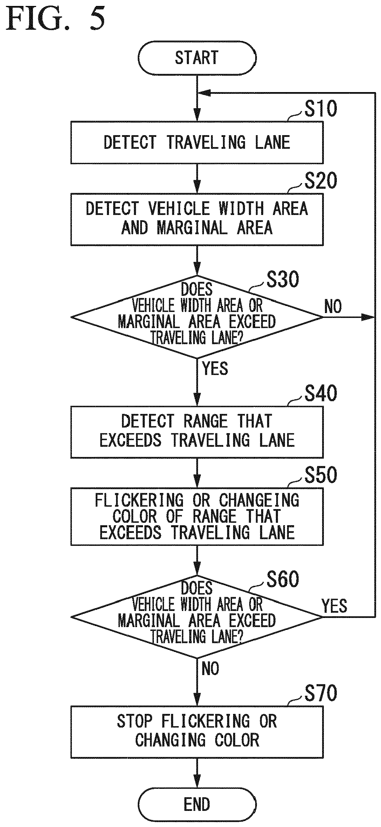

A procedure of an operation of the control device 10 according to the third embodiment will be described with reference to FIG. 5.

FIG. 5 is a view showing an example of an operation procedure of the control device 10 according to the third embodiment.

The sensor SS photographs a side in front of the vehicle 1. The sensor SS outputs the captured image obtained by photographing the side in front of the vehicle 1 to the information acquisition part 11. The information acquisition part 11 outputs the captured image input from the sensor SS to the determination part 12. The determination part 12 detects the traveling lane of the vehicle 1 on the basis of the captured image input from the information acquisition part 11 (step S10). Specifically, the determination part 12 detects a white line showing that the traveling line and another line are divided, a yellow line, a centerline, or the like.

The determination part 12 further detects the vehicle width area CWA, the marginal area MA1 and the marginal area MA2 on the basis of the captured image input from the information acquisition part 11 (step S20).

The determination part 12 determines whether the vehicle width area CWA, the marginal area MA1 or the marginal area MA2 detected in step S20 is radiated to a position that exceeds the traveling lane of the vehicle 1 (step S30).

The determination part 12 returns to step S10 and performs the same processing again when it is determined that the vehicle width area CWA, the marginal area MA1 or the marginal area MA2 is not radiated to a position that exceeds the traveling lane of the vehicle 1 (step S30; NO).

The determination part 12 outputs information showing the vehicle width area CWA, the marginal area MA1 or the marginal area MA2 is radiated to a range that exceeds the traveling lane (information showing a portion that exceeds the traveling lane) to the radiation controller 13 when it is determined that at least one of the vehicle width area CWA, the marginal area MA1 and the marginal area MA2 is radiated to a position that exceeds the traveling lane of the vehicle 1 (step S30; YES). The radiation controller 13 flickers or changes a color of the vehicle width area CWA, the marginal area MA1 or the marginal area MA2 (a portion that exceeds the traveling lane) radiated to a range that exceeds the traveling lane on the basis of the information that indicates the vehicle width area CWA, the marginal area MA1 or the marginal area MA2 is radiated to the range which exceeds the traveling lane and that is input from the determination part 12 (step S50).

The determination part 12 determines whether the vehicle width area CWA, the marginal area MA1 or the marginal area MA2 is radiated to the range that exceeds the traveling lane of the vehicle 1 on the basis of the captured image input from the information acquisition part 11 (step S60).

The determination part 12 returns to step S40 and performs the same processing again when it is determined that the vehicle width area CWA, the marginal area MA1 or the marginal area MA2 is radiated to the range that exceeds the traveling lane (step S60; YES).

The determination part 12 outputs the signal indicating stoppage of the variation of the vehicle width area CWA, the marginal area MA1 or the marginal area MA2 that was flickered or changed in color to the radiation controller 13 when it is determined that the vehicle width area CWA, the marginal area MA1 or the marginal area MA2 is not radiated to the range that exceeds the traveling lane (step S60; NO). The radiation controller 13 stops the variation of the vehicle width area CWA, the marginal area MA1 or the marginal area MA2 that was flickered or changed in color on the basis of the signal indicating to stop the variation which is input from the determination part 12 (step S70).

Here, in the control device 10, while the portion that exceeds the traveling lane (as an example, a crossbar portion of any one of the marginal areas) related to the pattern SA (the vehicle width area CWA, the marginal area MA1 and the marginal area MA2) is flickered or changed in color in the embodiment, as another example, a portion of the pattern SA other than the portion that exceeds the traveling lane may be flickered or changed in color, for example, the entire pattern SA may be flickered or changed in color.

### [Summary of third embodiment]

As described above, the radiation controller 13 according to the third embodiment performs flickering or differentiation of color of the light of the vehicle width area CWA, the marginal area MA1 or the marginal area MA2 radiated to the range that exceeds the traveling lane when the determination part 12 determined that the vehicle width area CWA, the marginal area MA1 or the marginal area MA2 is radiated to the range that exceeds the traveling lane. Accordingly, the driver who is driving the vehicle 1 can easily notice whether the direction of advance of the vehicle 1 is inside (falls in) the traveling lane.

Further, while the case in which the control device 10 shows whether the vehicle 1 is disposed in the traveling lane on which the vehicle 1 is traveling to the driver who is driving the vehicle 1 by flickering the light of the vehicle width area CWA, the marginal area MA1 or the marginal area MA2 radiated to the range that exceeds the traveling lane has been described in the above-mentioned description, there is no limitation thereto. For example, the radiation controller 13 may show whether the vehicle 1 is disposed in the traveling lane to the driver who is driving the vehicle 1 by outputting a predetermined signal to another apparatus when the marginal area MA1 or the marginal area MA2 exceeds a boundary of a road surface. For example, the radiation controller 13 may output a signal that indicates sound such as warning sound or the like to another apparatus such as a car navigation device or the like when the marginal area MA1 or the marginal area MA2 exceeds the boundary of the road surface. In this case, the other apparatus inputs the signal and outputs warning sound or the like according to the signal.

### <Fourth embodiment>

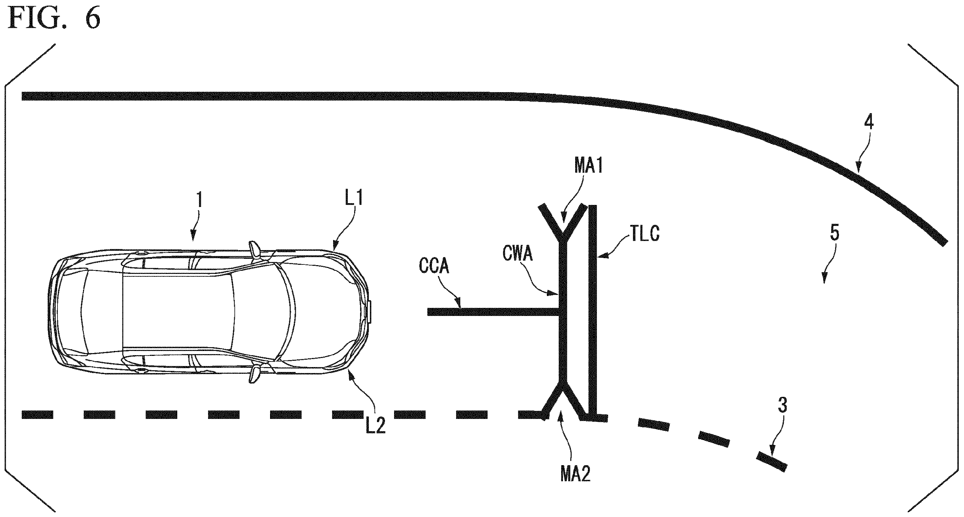

Next, a radiation controller 13 according to a fourth embodiment will be described with reference to FIG. 6. FIG. 6 is a view showing an example of pattern light radiated by the radiation controller 13 according to the fourth embodiment.

The radiation controller 13 according to the fourth embodiment radiates light TLC indicating guidance for a steering angle of the vehicle 1 when it is determined that the curve 5 is present in the direction of advance of the vehicle 1 in the map information by using the headlight L or another lamp. A shape of the light TLC showing the guide of the steering angle is, for example, a line extending in a direction parallel with respect to the direction corresponding to the vehicle width direction of the vehicle 1. Specifically, the radiation controller 13 acquires map information from the information acquisition part 11 and positional information showing a position of the vehicle 1.

For example, the radiation controller 13 radiates the light TLC showing the guide of the steering angle to a road surface in front of the vehicle 1 using the headlight L or another lamp when the curve 5 is present in the direction of advance of the vehicle 1 in map information input from the information acquisition part 11. A position to which the light TLC showing the guide of the steering angle is radiated is calculated on the basis of map information, a shape of the traveling lane acquired from the captured image, or positional information of the vehicle 1.

In FIG. 6, the pattern light of the pattern SA and the light TLC showing the guide of the steering angle are simultaneously radiated to a road surface.

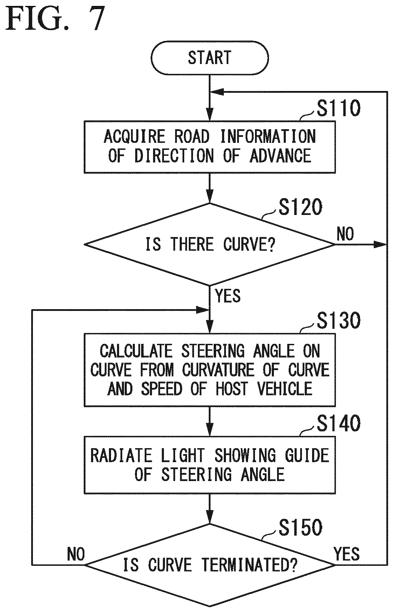

A procedure of an operation of the control device 10 according to the fourth embodiment will be described with reference to FIG. 7.

FIG. 7 is a view showing an example of an operation procedure of the control device 10 according to the fourth embodiment.

The information acquisition part 11 acquires map information and positional information of the vehicle 1 from the traveling information device CS. The information acquisition part 11 outputs map information acquired from the traveling information device CS and positional information of the vehicle 1 to the determination part 12. The determination part 12 acquires map information from the information acquisition part 11 and positional information of the vehicle 1. The determination part 12 acquires information of a road in the direction of advance of the vehicle on the basis of the map information and the positional information of the vehicle 1 (step S110), and determines whether a curve 5 is present in the direction of advance of the vehicle 1 (step S120).

The determination part 12 returns to step S110 and performs the same processing again when it is determined that the curve 5 is not present in the direction of advance of the vehicle 1 (step S120; NO).

The determination part 12 calculates a steering angle in the curve 5 (step S130) on the basis of the curvature showing a level of bending of the curve 5 and the speed of the vehicle 1 when it is determined that the curve 5 is present in the direction of advance of the vehicle 1 (step S120; YES). The determination part 12 outputs the calculated steering angle in the curve 5 to the radiation controller 13.

The radiation controller 13 acquires the steering angle in the curve 5 calculated by the determination part 12.

The radiation controller 13 radiates the light TLC showing the guide of the steering angle of the vehicle 1 from the headlights L on the basis of the steering angle in the curve 5 acquired by the determination part 12 (step S140).

The determination part 12 determines whether the curve 5 is terminated (step S150). The determination part 12 returns to step S130 and performs the same processing again when it is determined that the curve is not terminated (step S150; NO).

The determination part 12 returns to step S110 and performs the same processing again when it is determined that the curve is terminated (step S150; YES).

### [Summary of fourth embodiment]

As described above, the radiation controller 13 according to the fourth embodiment radiates the light TLC showing the guide of the steering angle on the basis of the map information. The driver can suppress insufficiency of a driving operation, for example, entering of the vehicle to another traveling lane due to over-steering by the driver, insufficient turning in the curve 5 due to under-steering of the handle by operating the vehicle 1 (for example, an operation of a steering handle, an operation of a steering angle) such that a state in which the light TLC showing the guide of the steering angle is made parallel to the marginal area MA1, the marginal area MA2 or the vehicle width area CWA is maintained. Accordingly, the vehicle 1 can appropriately travel the curve 5.

Further, while the case in which the pattern SA is a pattern of the light radiated by the headlight L1 and the headlight L2 has been described in the above-mentioned description, there is no limitation thereto.

The pattern SA may be, for example, a shadow. That is, from the range of the light radiated by the headlight L1 and the headlight L2, it may be a pattern shadowing a portion to which only the pattern SA is not radiated.

In this way, the pattern SA may be realized as a range to which light is radiated (a bright range) or may be realized as a range to which light is not radiated (a dark range seen from a brightness of light of surroundings).

Further, for example, a low beam lamp, a high beam lamp, a micro electro-mechanical systems (MEMS) laser scanning headlamp, a digital micro-mirror device (DMD) headlamp, a matrix adaptive driving beam (ADB) headlamp, an adaptive driving beam (ADB) headlamp, and so on, may be used as a lamp that radiates light according to the above-mentioned first to fourth embodiments.

Further, while the configuration in which the control device 10 acquires the host vehicle traveling information from the traveling information device CS has been described in the above-mentioned description, there is no limitation thereto. The control device 10 may include, for example, one or more of a speed sensor configured to detect information of a speed of a host vehicle, a gyro sensor configured to detect information of an attitude of the host vehicle, a steering angle sensor configured to detect information of a steering angle of the host vehicle, an acceleration sensor configured to detect information of an acceleration of the host vehicle, and a position sensor configured to detect information of a position of the host vehicle. Further, for example, a position sensor having a function of a global positioning system (GPS) may be used as the position sensor.

Further, for example, the above-mentioned control device 10 has a computer provided therein. Then, a process of each processing of the above-mentioned device is stored on a computer-readable recording medium as a program format, and the processing is performed by reading and executing the program using a computer. Here, the computer-readable recording medium is referred to as a magnetic disk, a magneto-optic disk, a CD-ROM, a DVD-ROM, a semiconductor memory, or the like. In addition, the computer program may be delivered to the computer via a communication line, and the computer by which the delivery is received may execute the program.

In addition, the program may be configured to realize a part of the above-mentioned function.

Further, the above-mentioned function may be a so-called differential file (differential program) that can be combined with and realized by the program already recorded in the computer system.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A control device for a vehicle headlight that controls radiation of light from the vehicle headlight, the control device comprising:
a radiation controller that causes the vehicle headlight to radiate pattern light, which includes a first pattern, to a marginal portion that exceeds a portion corresponding to a vehicle width of the vehicle.

2. The controlling device for a vehicle headlight according to claim 1, wherein the radiation controller radiates the pattern light, which further includes a second pattern, to a portion corresponding to the vehicle width of the vehicle, as the pattern light.

3. The controlling device for a vehicle headlight according to claim 1 or 2, wherein the radiation controller radiates the pattern light, which further includes a third pattern, to a portion extending in a perpendicular direction with respect to a center portion corresponding to the vehicle width of the vehicle, as the pattern light.

4. The controlling device for a vehicle headlight according to any one of claims 1 to 3, wherein the first pattern includes a pattern that causes an optical illusion which makes a direction of the vehicle width of the vehicle look wider.

5. The controlling device for a vehicle headlight according to any one of claims 1 to 4, wherein the radiation controller causes flashing of light, or makes the colors of light different from each other in all or a part of the pattern light in a case the marginal portion exceeds a boundary of a road surface.

6. The controlling device for a vehicle headlight according to any one of claims 1 to 5, wherein the radiation controller outputs a predetermined signal to another device in a case the marginal portion exceeds a boundary of a road surface.

7. The controlling device for a vehicle headlight according to any one of claims 1 to 6, wherein the radiation controller radiates light indicating guidance for a steering angle of the vehicle by using the headlights or other lights in a case a curve is present in a direction of advance of the vehicle in map information.
